# EUROPÄISCHE PATENTSCHRIFT

(11) **EP 1 336 344 B1**
(45) Veröffentlichungstag und Bekanntmachung des Hinweises auf die Patenterteilung: **01.06.2005**
(21) Anmeldenummer: 02027341.3
(22) Anmeldetag: 07.12.2002
(51) Int. Cl.: A23P 1/08

(54) **Verfahren zur Herstellung eines Lebensmittels**
Process for preparing a food
Procédé de préparation d'un aliment

(30) Priorität: 13.02.2002 DE 10205824
(43) Veröffentlichungstag der Anmeldung: 20.08.2003
(73) Patentinhaber: Dr. AUGUST OETKER NAHRUNGSMITTEL KG, 33617 Bielefeld (DE)
(72) Erfinder: Stövesand, Rolf, D-59302, Oelde (DE)
(74) Vertreter: Meyer, Gerd

(56) Entgegenhaltungen:
- EP-A- 1 088 487
- GB-A- 2 325 843
- US-A- 5 137 745
- US-A- 5 558 890
- US-A1- 2001 018 083
- DATABASE WPI Section Ch, Week 200255 Derwent Publications Ltd., London, GB; Class D13, AN 2002-512174 XP002240543 & JP 2002 112717 A (SUZUSHIGE KIKO KK), 16. April 2002 (2002-04-16)

## Beschreibung

Aufgabe der vorliegenden Erfindung ist es, ein Produkt zu schaffen, dessen Verzehreigenschaften weit über denen liegen, die bei ähnlichen Produkten, wie zum Beispiel Snackerzeugnissen, Flammenkuchen, Pizzen und dergleichen bekannt sind.

Es ist mehrfach versucht worden, Produkte wie Snackerzeugnisse, Flammenkuchen, Pizzen und dergleichen zu verbessern.

Die US-Patentschrift 5,558,890 offenbart mehrduchtige Getreideprodukte.

Die gestellte Aufgabe wird gelöst durch das Verfahren gemäß dem Hauptanspruch 1. Alternative Verfahrensformen ergeben sich aus den Ansprüchen 2 - 10.

Das erfindungsgemäße Verfahren läuft so ab, daß zunächst als eine erste Schicht zum menschlichen Verzehr geeignete Produkte wie Nudeln, Kartoffeln, Getreidemahlerzeugnisse, Fleisch und Fleischprodukte, Fisch und Fischprodukte sowie Mischungen derartiger Produkte unter Verwendung von Bindemitteln, wie zum Beispiel Eier, Wasser und dergleichen zu einer homogenen Masse, wie zum Beispiel Teig, vermischt und in eine vorherbestimmte vorzugsweise flache Form gebracht werden. Auf diese erste Schicht wird eine zweite Schicht aufgebracht, welche zum Beispiel aus Molkereiprodukten, wie etwa Käse, aber auch Gemüse-Fleisch-Komponenten, Cerealien, Nuß-, Getreide- und/oder Getreidemahlerzeugnisse, vornehmlich in zubereiteter Form sowie Mischungen daraus bestehen. Die 2. Schicht wird durch Backen oder gezieltes Trocknen so verfestigt, daß sich bei erneutem Aufbacken keine Rückstände absondern. Die 2. Schicht des erfindungsgemäßen Erzeugnisses wird durch Druck vorzugsweise Preßdruck mit der Schicht 1 verbunden, wobei der vorgeschlagene Preßdruck 1 - 12 bar, vorzugsweise 5 - 10 bar, beträgt und die Preßzeit eine Zeitspanne von 0,1 - 3 Sekunden umfaßt. Bei gewissen Nahrungsmittelzusammensetzungen kann es erforderlich sein, mit beheizten Preßköpfen zu arbeiten, wobei in einem solchen Falle eine Preßtemperatur zwischen + 40 und + 500 °C vorgeschlagen wird. Nach dem Verfestigen der 2. mit der 1. Schicht wird das Produkt gewendet und mit weiteren Lebensmitteln belegt. Alternativ wird vorgeschlagen, nach dem Verfestigen der 2. mit der 1. Schicht einen Erhitzungsprozeß durchzuführen und erst dann das Produkt zu wenden und mit weiteren Lebensmitteln zu belegen.

## Patentansprüche

1. Verfahren zur Herstellung eines Lebensmittels, wobei homogene, sich fest miteinander verbindende, für den menschlichen Verzehr bestimmte Erzeugnisse als eine erste Schicht in eine vorherbestimmte Form gebracht werden und auf deren Oberseite weitere Lebensmittel bzw. Lebensmittelmischungen als zweite Schicht aufgebracht werden, die durch Anwendung von Druck, vorzugsweise Preßdruck, mit der Oberseite verfestigt werden, danach das Produkt gewendet und mit weiteren Lebensmitteln belegt wird.

2. Verfahren nach Anspruch 1, **dadurch gekennzeichnet, daß** der vorgesehene Druck mit beheizten Preßköpfen durchgeführt wird.

3. Verfahren nach den Ansprüchen 1 und 2, **dadurch gekennzeichnet, daß** der Preßdruck 1 - 12 bar (1-2 atü), vorzugsweise 5 - 10 bar (5-10 atü) beträgt.

4. Verfahren nach den Ansprüchen 1 und mindestens einem der vorhergehenden Ansprüche, **dadurch gekennzeichnet, daß** die Preßzeit mindestens 0,1 Sekunden beträgt.

5. Verfahren nach Anspruch 1, **dadurch gekennzeichnet, daß** die Preßstempeltemperatur zwischen + 40 und + 500°C beträgt.

6. Verfahren nach Anspruch 1, **dadurch gekennzeichnet, daß** es sich bei der ersten Schicht um Teige handelt.

7. Verfahren nach Anspruch 1, **dadurch gekennzeichnet, daß** die 1. Schicht aus unterschiedlichen Lebensmitteln wie Nudeln, Kartoffeln, Fleisch und Fleischprodukte sowie Mischungen daraus besteht.

8. Verfahren nach Anspruch 1, **dadurch gekennzeichnet, daß** die 2. Schicht aus Käse und/oder Gemüse und/oder Fleischkomponenten und/oder Cerealien und/oder Nuß- und/oder Getreide- und/oder Getreidemahlerzeugnissen in zubereiteter Form sowie Mischungen vorstehend genannter Produkte besteht.

9. Verfahren nach den Ansprüchen 1 und 8, **dadurch gekennzeichnet, daß** die 2. Schicht durch Backen so verfestigt wird, daß sich bei erneutem Aufbacken keine Rückstände absondern.

10. Verfahren nach den Ansprüchen 1 und 8, **dadurch gekennzeichnet, daß** die 2. Schicht durch Trocknen so verfestigt wird, daß sich bei erneutem Aufbacken keine Rückstände absondern.

11. Verfahren nach den Ansprüchen 1 bis 10, **dadurch gekennzeichnet, daß** sich an das durch Pressen erfolgte Verfestigen der Oberseite ein Erhitzungsprozeß anschließt und erst danach das Produkt gewendet und mit weiteren Lebensmitteln belegt wird.

## Claims

1. Method of producing a foodstuff, wherein homogeneous products, which are fixedly connected together and intended for human consumption, as a first layer are brought into a predetermined form and further foodstuffs or foodstuff mixtures are applied as a second layer to the upper side thereof and are fixed with the upper side by application of pressure, preferably pressing pressure, the product thereafter being turned and coated with further foodstuffs.

2. Method according to claim 1, **characterised in that** the provided pressure is carried out with heated press heads.

3. Method according to claims 1 and 2, **characterised in that** the pressing pressure amounts to 1 to 12 bars (1 to 12 atmospheres), preferably 5 to 10 bars (5 to 10 atmospheres).

4. Method according to claim 1 and at least one of the preceding claims, **characterised in that** the pressing time amounts to at least 0.1 seconds.

5. Method according to claim 1, **characterised in that** the pressing ram temperature amounts to between +40 and +500° C.

6. Method according to claim 1, **characterised in that** the first layer is dough.

7. Method according to claim 1, **characterised in that** the first layer consists of different foodstuffs such as noodles, potatoes, meat and meat products as well as mixtures thereof.

8. Method according to claim 1, **characterised in that** the second layer consists of cheese and/or vegetables and/or meat components and/or cereals and/or nut products and/or grain products and/or ground grain products in prepared form as well as mixtures of the aforesaid products.

9. Method according to claims 1 and 8, **characterised in that** the second layer is so solidified by baking that no residues separate in the case of renewed heating up.

10. Method according to claims 1 and 8, **characterised in that** the second layer is so solidified by drying that no residues separate in the case of renewed heating up.

11. Method according to claims 1 to 10, **characterised in that** a heating process is consecutive to the solidified of the upper side carried out by pressing and only thereafter is the product turned and coated with further foodstuffs.

## Revendications

1. Procédé de fabrication d'un aliment, dans lequel des produits homogènes se liant fermement les uns aux autres et destinés à la consommation humaine sont amenés à une forme prédéterminée, en tant que première couche ; et d'autres aliments ou mélanges d'aliments sont respectivement déposés, sur la face supérieure desdits produits, sous la forme d'une seconde couche qui est consolidée avec la face supérieure par application d'une pression, de préférence une pression de compression, après quoi le produit est retourné et garni d'autres aliments.

2. Procédé selon la revendication 1, **caractérisé par le fait que** la pression prévue est exercée par des têtes de compression chauffées.

3. Procédé selon les revendications 1 et 2, **caractérisé par le fait que** la pression de compression mesure de 1 à 12 bar (de 1 à 12 atü), de préférence de 5 à 10 bar (de 5 à 10 atü).

4. Procédé selon la revendication 1 et au moins l'une des revendications précédentes, **caractérisé par le fait que** le temps de compression mesure au moins 0,1 seconde.

5. Procédé selon la revendication 1, **caractérisé par le fait que** la température des blocs de compression est comprise entre + 40 et + 500°C.

6. Procédé selon la revendication 1, **caractérisé par le fait que** la première couche se présente comme des pâtes travaillées.

7. Procédé selon la revendication 1, **caractérisé par le fait que** la première couche est constituée de différents aliments tels que des nouilles, des pommes de terre, de la viande et des produits à base de viande, ainsi que des mélanges de ces derniers.

8. Procédé selon la revendication 1, **caractérisé par le fait que** la seconde couche consiste en du fromage et/ou en des légumes et/ou en des composants de la viande et/ou en des céréales et/ou en des produits à base de noix et/ou à base de grains et/ou à base de grains broyés, sous forme préparée, ainsi qu'en des mélanges des produits précités.

9. Procédé selon les revendications 1 et 8, **caractérisé par le fait que** la seconde couche est consolidée par cuisson au four, de manière qu'il ne subsiste pas de résidus lors d'une cuisson au four réitérée.

10. Procédé selon les revendications 1 et 8, **caractérisé par le fait que** la seconde couche est consolidée par séchage, de manière qu'il ne subsiste pas de résidus lors d'une cuisson au four réitérée.

11. Procédé selon les revendications 1 à 10, **caractérisé par le fait qu'**un processus de réchauffage succède directement à la consolidation de la face supérieure obtenue par compression, après quoi seulement le produit est utilisé et garni d'autres aliments.
